# EUROPEAN PATENT SPECIFICATION

(11) **EP 3 345 688 B1**
(45) Date of publication and mention of the grant of the patent: **14.12.2022**
(21) Application number: 15903041.0
(22) Date of filing: 03.09.2015
(51) Int. Cl.: B21B 37/74, B21B 45/00

(54) **SYSTEM FOR CONTROLLING HOT-ROLLED STEEL PLANT**
SYSTEM ZUR STEUERUNG EINER ANLAGE FÜR WARMGEWALZTEN STAHL
SYSTÈME DE COMMANDE D'INSTALLATION D'ACIER LAMINÉ À CHAUD

(43) Date of publication of application: 11.07.2018
(73) Proprietor: Toshiba Mitsubishi-Electric Industrial Systems Corporation, Tokyo 104-0031 (JP)
(72) Inventor: TAKAGI, Katsuyuki, Tokyo 104-0031 (JP)
(74) Representative: Winter, Brandl - Partnerschaft mbB
(86) International application number: PCT/JP2015/075088
(87) International publication number: WO 2017/037922

(56) References cited:
- EP-A1- 2 524 971
- DE-A1-102006 047 718
- JP-A- 2000 176 526
- JP-A- 2014 079 778

## Description

### Field

The present invention relates to a system for controlling a hot-rolled steel plant. Background

PTL 1 discloses an induction heating apparatus for a hot-rolled steel plant. In the hot-rolled steel plant, the induction heating apparatus is provided on an entry side of a finishing mill. The induction heating apparatus is able to reduce temperature variations inside a steel material before the steel material arrives at the finishing mill. At this time, the induction heating apparatus requires settings based on computation results of temperature distribution inside the steel material when the steel material arrives at a delivery side of the induction heating apparatus.

### Citation List

### Patent Literature

[PTL 1] JP 2014-175082 A
PTL 2: DE 10 2006 047718 A1

### Summary

### Technical Problem

However, PTL 1 does not disclose details of temperature distribution inside the steel material when the steel material arrives at the delivery side of the induction heating apparatus. Therefore, there are some cases in which the temperature variations inside the steel material are not reduced before the steel material arrives at the finishing mill.

PTL 2 relates to a method for computing and monitoring particularly a temperature distribution of a hot-rolled sheet at several points of a hot-rolled steel plant and is considered the closest prior art. However, the system disclosed therein is not described in conjunction with induction heating. Furthermore, PTL 1 does not show an entry-side temperature computation unit for computing, based on the temperature distribution inside the steel material computed by the extraction temperature computation unit, temperature distribution inside the steel material when the steel material arrives at an entry side of the induction heating apparatus; and a delivery-side temperature computation unit for computing, based on the temperature distribution inside the steel material computed by the entry-side temperature computation unit, temperature distribution inside the steel material when the steel material arrives at a delivery side of the induction heating apparatus.

The present invention has been made to solve the above-described problem. An object of the present invention is to provide a system for controlling a hot-rolled steel plant capable of accurately ascertaining temperature distribution inside a steel material when the steel material arrives at a delivery side of an induction heating apparatus. Solution to Problem

A system for controlling a hot-rolled steel plant, said hot-rolled steel plant having a heating furnace for heating a steel material and an induction heating apparatus disposed on a delivery side of the heating furnace, wherein the system according to the present invention includes: an extraction temperature computation unit for computing temperature distribution inside the steel material when the steel material is extracted from the heating furnace; an entry-side temperature computation unit for computing, based on the temperature distribution inside the steel material computed by the extraction temperature computation unit, temperature distribution inside the steel material when the steel material arrives at an entry side of the induction heating apparatus; and a delivery-side temperature computation unit for computing, based on the temperature distribution inside the steel material computed by the entry-side temperature computation unit, temperature distribution inside the steel material when the steel material arrives at a delivery side of the induction heating apparatus.

### Advantageous Effects of Invention

According to the present invention, the temperature distribution inside the steel material when the steel material arrives at the delivery side of the induction heating apparatus is computed by taking over data of temperature distribution inside the steel material when the steel material is extracted from the heating furnace. Therefore, it is possible to accurately ascertain the temperature distribution inside the steel material when the steel material arrives at the delivery side of the induction heating apparatus.

### Brief Description of Drawings

[Fig. 1]

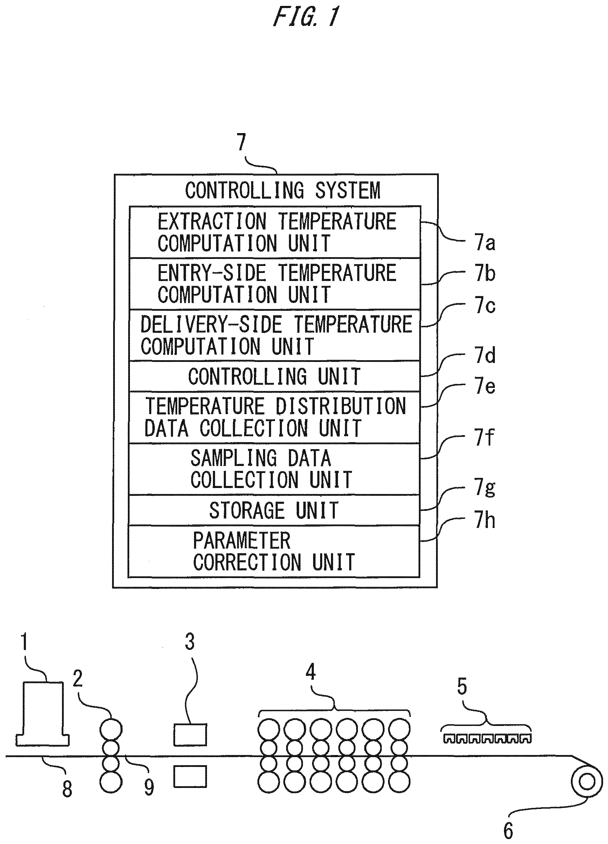

   Fig. 1 is a configuration diagram of a hot-rolled steel plant to which a system for controlling a hot-rolled steel plant in Embodiment 1 of the present invention is applied.
[Fig. 2]

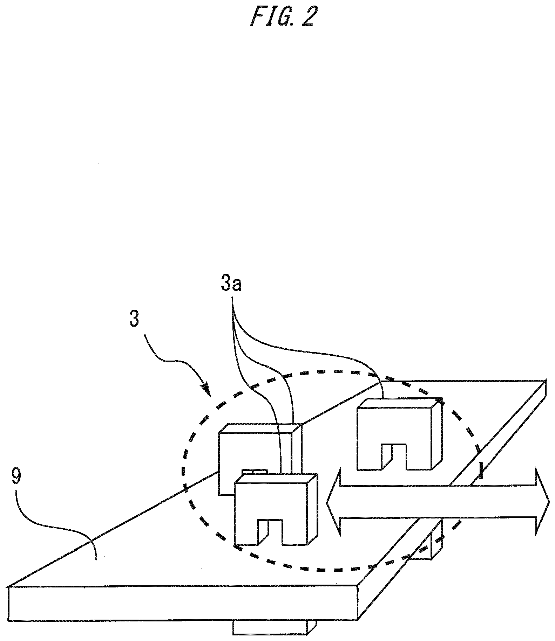

   Fig. 2 is a perspective view of an induction heating apparatus of the hot-rolled steel plant to which the system for controlling a hot-rolled steel plant in Embodiment 1 of the present invention is applied.
[Fig. 3]

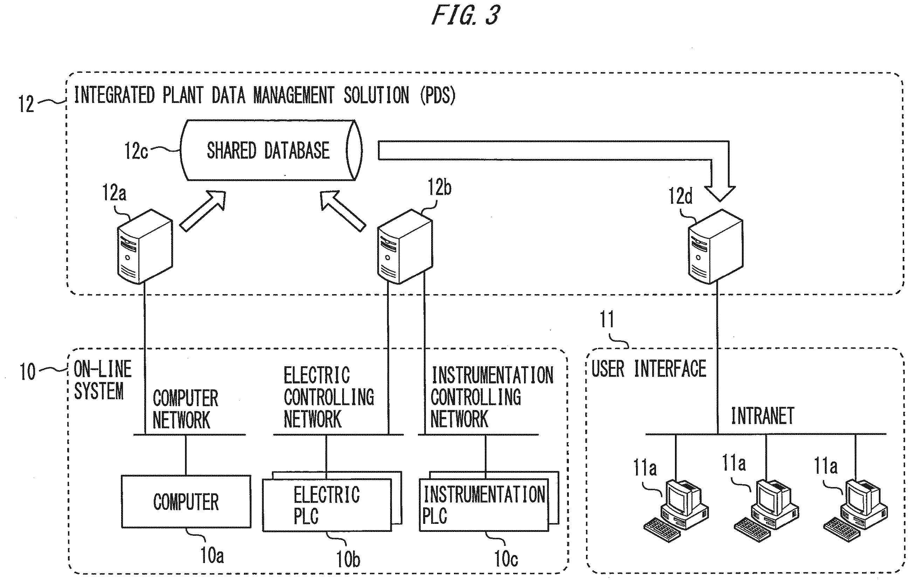

   Fig. 3 is a configuration diagram of the system for controlling a hot-rolled steel plant in Embodiment 1 of the present invention.
[Fig. 4]

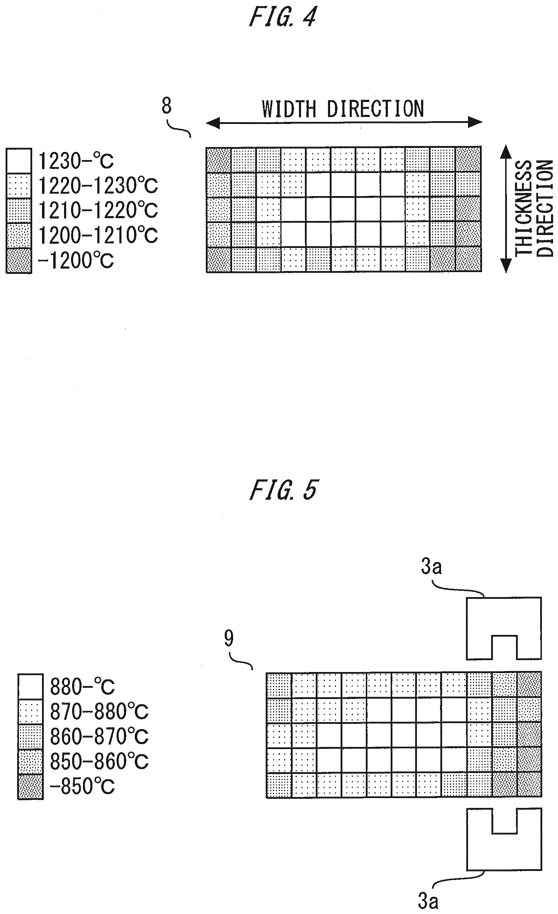

   Fig. 4 is a diagram showing computation results of temperature distribution inside a slab by the system for controlling a hot-rolled steel plant in Embodiment 1 of the present invention.
[Fig. 5]
   Fig. 5 is a diagram showing computation results of temperature distribution inside a steel plate by the system for controlling a hot-rolled steel plant in Embodiment 1 of the present invention.
[Fig. 6]

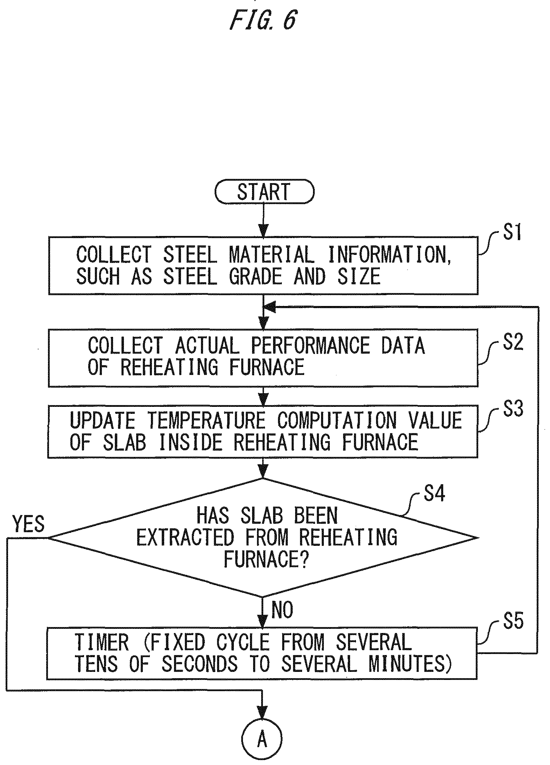

   Fig. 6 is a flowchart for illustrating operations of the system for controlling a hot-rolled steel plant in Embodiment 1 of the present invention.
[Fig. 7]

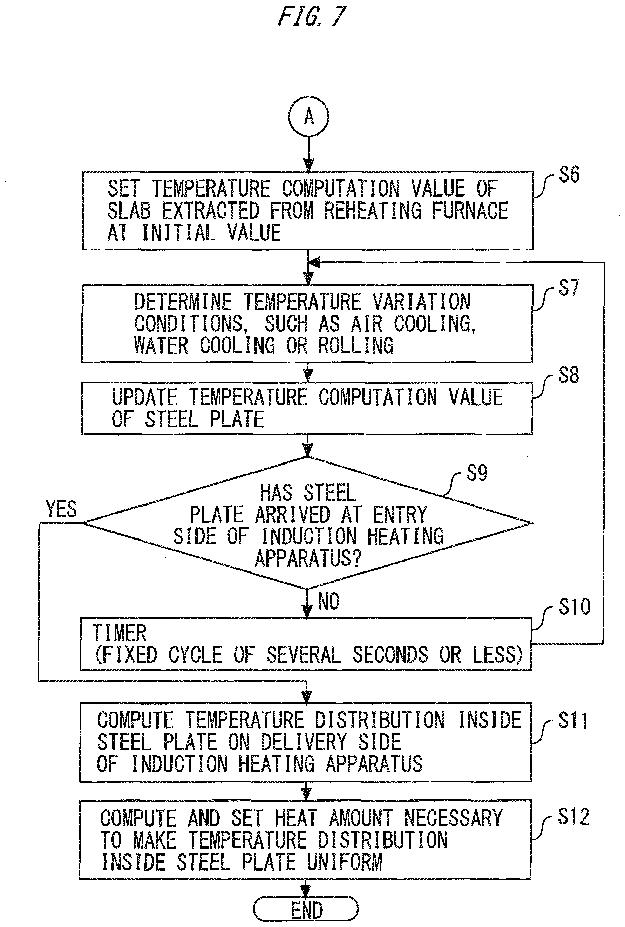

   Fig. 7 is a flowchart for illustrating operations of the system for controlling a hot-rolled steel plant in Embodiment 1 of the present invention.
[Fig. 8]

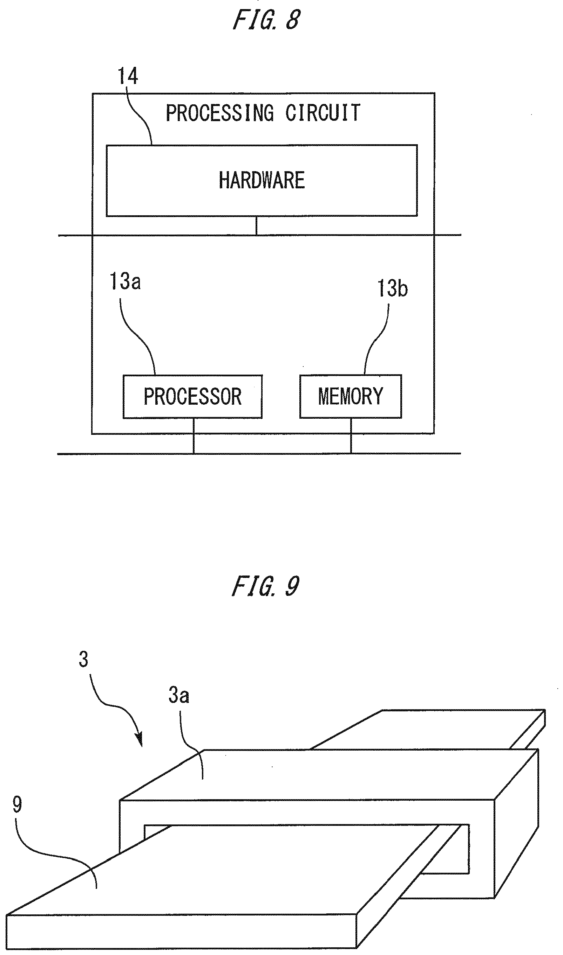

   Fig. 8 is a hardware configuration diagram of the system for controlling a hot-rolled steel plant in Embodiment 1 of the present invention.
[Fig. 9]
   Fig. 9 is a perspective view of an induction heating apparatus of the hot-rolled steel plant to which the system for controlling a hot-rolled steel plant in Embodiment 2 of the present invention is applied.
[Fig. 10]

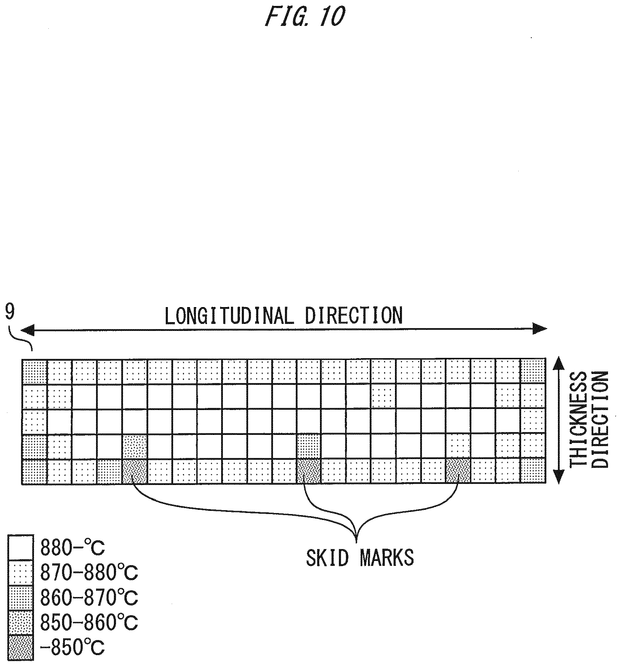

   Fig. 10 is a diagram showing computation results of temperature distribution inside a steel plate by the system for controlling a hot-rolled steel plant in Embodiment 2 of the present invention.

### Description of Embodiments

Embodiments for practicing the present invention will be described in accordance with attached drawings. Note that, in the figures, same or corresponding parts are assigned with same reference signs. Redundant descriptions in those parts will be appropriately simplified or omitted.

### Embodiment 1

Fig. 1 is a configuration diagram of a hot-rolled steel plant to which a system for controlling a hot-rolled steel plant in Embodiment 1 of the present invention is applied.

In Fig. 1, the hot-rolled steel plant includes at least one reheating furnace 1, at least one roughing mill 2, an induction heating apparatus 3, multiple finishing mills 4, at least one cooling facility 5 and at least one coiler 6.

The reheating furnace 1 is provided on an entry side of the hot-rolled steel plant. The roughing mill 2 is provided on a delivery side of the reheating furnace 1. The induction heating apparatus 3 is provided on a delivery side of the roughing mill 2. The multiple finishing mills 4 are provided on a delivery side of the induction heating apparatus 3. For example, six finishing mills 4 are provided on the delivery side of the induction heating apparatus 3 in line from the entry side to a delivery side of the hot-rolled steel plant. The cooling facility 5 is provided on the delivery side of the finishing mills 4. The coiler 6 is provided on a delivery side of the cooling facility 5.

Not-shown multiple thermocouples are provided inside the reheating furnace 1. For example, the multiple thermocouples are provided in line in a width direction of the reheating furnace 1.

A controlling system 7 includes an extraction temperature computation unit 7a, an entry-side temperature computation unit 7b, a delivery-side temperature computation unit 7c, a controlling unit 7d, a temperature distribution data collection unit 7e, a sampling data collection unit 7f, a storage unit 7g and a parameter correction unit 7h.

The steel material is charged into the reheating furnace 1 in a state of a slab 8. The slab 8 is heated up to around 1200°C by the reheating furnace 1. Thereafter, the slab 8 is extracted from the reheating furnace 1. Then, the slab 8 is rolled to a steel plate 9 with a thickness of several tens of millimeters by the roughing mill 2. At an end portion of the steel plate 9, the temperature varies significantly. Therefore, the end portion of the steel plate 9 is heated by the induction heating apparatus 3. Thereafter, the steel plate 9 is elongated to be much thinner by the finishing mill 4. Then, the steel plate 9 is cooled by the cooling facility 5. Thereafter, the steel plate 9 is wound in a coil by the coiler 6.

The controlling system 7 controls the roughing mill 2, the induction heating apparatus 3, the multiple finishing mills 4, the cooling facility 5 and the coiler 6.

For example, the extraction temperature computation unit 7a of the controlling system 7 computes, on the basis of ambient temperature inside the reheating furnace 1, the temperature distribution inside the slab 8 when the slab 8 is extracted from the reheating furnace 1. On this occasion, the ambient temperature inside the reheating furnace 1 is measured by each of the multiple thermocouples.

Specifically, the extraction temperature computation unit 7a substitutes a finitely-divided fine mesh for time and space and computes the temperature distribution inside the slab 8 by the method of finite differences or the finite element method. On this occasion, the extraction temperature computation unit 7a computes, upon providing initial conditions when the slab 8 is charged into the reheating furnace 1, the temperature distribution inside the slab 8 by use of two-dimensional or three-dimensional heat equation.

The extraction temperature computation unit 7a repeats computation of temperature rising in the slab 8 in a fixed cycle from several tens of seconds to several minutes until the slab 8 is extracted from the reheating furnace 1. On this occasion, the extraction temperature computation unit 7a computes the temperature variation inside the slab 8 in the next cycle based on the computation results of the last cycle as an input value.

The boundary conditions of the heat equation are given by computation of heat flux. The computation is performed based on the measured value in each of the multiple thermocouples. In each cycle, the ambient temperature inside the reheating furnace 1 varies. Therefore, the measured values in the respective multiple thermocouples are different. In this case, given heat fluxes are different in the meshes in respective spaces. As a result, the computed temperature distributions inside the slab 8 are not uniform.

For example, when two-dimensional heat equation is used, the temperature distribution inside the slab 8 is computed in one of the width direction and the longitudinal direction in addition to the thickness direction of the slab 8. For example, when three-dimensional heat equation is used, the temperature distribution inside the slab 8 is computed in both of the width direction and the longitudinal direction in addition to the thickness direction of the slab 8.

The entry-side temperature computation unit 7b of the controlling system 7 computes, on the basis of the temperature distribution inside the slab 8 when the slab 8 is extracted from the reheating furnace 1, the temperature distribution inside the steel plate 9 when the slab 8 is formed into the steel plate 9 by the roughing mill 2 and arrives at the entry side of the induction heating apparatus 3.

Specifically, the entry-side temperature computation unit 7b substitutes a finitely-divided fine mesh for time and space and computes the temperature distribution inside the steel plate 9 by the method of finite differences or the finite element method. On this occasion, the entry-side temperature computation unit 7b repeats, with the temperature distribution inside the slab 8 when the slab 8 is extracted from the reheating furnace 1 as an initial value, computation of the temperature distribution inside the steel plate 9 by use of two-dimensional or three-dimensional heat equation.

Until the slab 8 is formed into the steel plate 9 by the roughing mill 2 and arrives at the entry side of the induction heating apparatus 3, conditions change severely. Therefore, the entry-side temperature computation unit 7b sets the time mesh in response to changes in the conditions. The entry-side temperature computation unit 7b adjusts the space mesh in conformity with the time mesh in some cases.

For example, the boundary conditions of the heat equation and the nodal conditions of the mesh are set based on heat transfer by air cooling or water cooling from extraction of the slab 8 from the reheating furnace 1 to arrival thereof at the roughing mill 2. For example, the boundary conditions of the heat equation and the nodal conditions of the mesh are set based on heat generation due to processing and friction when the slab 8 is rolled by the roughing mill 2. For example, the boundary conditions of the heat equation and the nodal conditions of the mesh are set based on heat transfer due to the slab 8 brought into contact with rolls of the roughing mill 2.

The delivery-side temperature computation unit 7c of the controlling system 7 computes, on the basis of the temperature distribution inside the steel plate 9 when the steel plate 9 arrives at the entry side of the induction heating apparatus 3, the temperature distribution inside the steel plate 9 when the steel plate 9 arrives at the delivery side of the induction heating apparatus 3.

Specifically, the delivery-side temperature computation unit 7c substitutes a finitely-divided fine mesh for time and space and computes the temperature distribution inside the steel plate 9 by the method of finite differences or the finite element method. On this occasion, the delivery-side temperature computation unit 7c repeats, with the temperature distribution inside the steel plate 9 when the steel plate 9 arrives at the entry side of the induction heating apparatus 3 as an initial value, computation of the temperature distribution inside the slab 8 by use of two-dimensional or three-dimensional heat equation.

For example, the boundary conditions of the heat equation are set on the basis of heat transfer by air cooling. For example, the nodal conditions of the mesh are set on the basis of applied current to the induction heating apparatus 3.

The controlling unit 7d of the controlling system 7 controls the induction heating apparatus 3 so that, on the basis of the temperature distribution inside the steel plate 9 when the steel plate 9 arrives at the delivery side of the induction heating apparatus 3, the temperature distribution inside the steel plate 9 on the delivery side of the induction heating apparatus 3 becomes a desired temperature distribution.

In the controlling system 7, the temperature distribution data collection unit 7e collects data of temperature distribution inside the steel plate 9 computed by the delivery-side temperature computation unit 7c. The sampling data collection unit 7f collects actual sampling data in the hot-rolled steel plant. The storage unit 7g stores the temperature distribution data collected by the temperature distribution data collection unit 7e and the sampling data collected by the sampling data collection unit 7f in association with information of the steel material. The parameter correction unit 7h corrects, on the basis of the temperature distribution data and the sampling data associated with the information of the steel plate 9 in the storage unit 7g, parameters when the delivery-side temperature computation unit 7c computes the temperature distribution inside the steel plate 9.

Next, by use of Fig. 2, the induction heating apparatus 3 will be described.

Fig. 2 is a perspective view of the induction heating apparatus of the hot-rolled steel plant to which the system for controlling the hot-rolled steel plant in Embodiment 1 of the present invention is applied.

The induction heating apparatus 3 in Fig. 2 is a transverse-type induction heating apparatus. The induction heating apparatus 3 includes multiple inductors 3a. Each of the multiple inductors 3a is movable in the width direction of the steel plate 9.

Next, by use of Fig. 3, a configuration of the controlling system 7 will be described.

Fig. 3 is a configuration diagram of the system for controlling the hot-rolled steel plant in Embodiment 1 of the present invention.

In Fig. 3, the controlling system 7 includes an on-line system 10, a user interface 11 and an integrated plant data management solution 12.

The on-line system 10 includes a computer 10a, an electric PLC 10b and an instrumentation PLC 10c.

The user interface 11 includes multiple user PCs 11a.

The integrated plant data management solution 12 includes an RDB server 12a, a sampling data server 12b, a shared database 12c and a search engine server 12d.

In the integrated plant data management solution 12, the RDB server 12a collects product information with an ID of a steel material as a key and parameters used for control that are managed by the computer 10a. The sampling data server 12b collects time-series sampling data, in the on-line system 10, of the reheating furnace 1, the roughing mill 2, the induction heating apparatus 3, the finishing mills 4 and not-shown specific instrumentation items, the sampling data being managed by the electric PLC 10b and the instrumentation PLC 10c.

The shared database 12c stores all data collected by the RDB server 12a and the sampling data server 12b. The shared database 12c stores the data for a long period of time.

The search engine server 12d includes a search function for the shared database 12c.

A user performs comparative evaluation, by use of the user PC 11a, between a computation value of temperature distribution of the steel plate 9 on the entry side of the finishing mills 4 and an actual performance value of temperature of the steel plate 9 measured by a thermometer disposed on the entry side of the finishing mills 4. On this occasion, the user searches the shared database 12c for all data associated with specific key information by use of the search function of the search engine server 12d. The user browses and extracts the data. The user freely selects on-line data of each control system, and organically associates the selected data pieces with one another with an ID of a steel material as a key. The user performs detailed investigation and analysis of data by using a large amount of data stored for a long period of time.

Next, by use of Fig. 4, description will be given of temperature distribution inside the slab 8 obtained when a mesh is cut in the thickness direction and the width direction of the slab 8.

Fig. 4 is a diagram showing computation results of temperature distribution inside the slab by the system for controlling the hot-rolled steel plant in Embodiment 1 of the present invention.

In Fig. 4, for example, the mesh is divided into five in the thickness direction of the slab 8. For example, the mesh is divided into eleven in the width direction of the slab 8. For example, the temperature of each mesh is divided into five temperature zones. The first temperature zone is set lower than 1200°C. The second temperature zone is set at 1200°C or higher and lower than 1210°C. The third temperature zone is set at 1210°C or higher and lower than 1220°C. The fourth temperature zone is set at 1220°C or higher and lower than 1230°C. The fifth temperature zone is set at 1230°C or higher.

Next, by use of Fig. 5, reheating of temperature decreasing portion in the steel plate 9 will be described.

Fig. 5 is a diagram showing computation results of temperature distribution inside the steel plate by the system for controlling the hot-rolled steel plant in Embodiment 1 of the present invention.

In Fig. 5, for example, the mesh is divided into five in the thickness direction of the steel plate 9. For example, the mesh is divided into eleven in the width direction of the steel plate 9. For example, the temperature of each mesh is divided into five temperature zones. The first temperature zone is set lower than 850°C. The second temperature zone is set at 850°C or higher and lower than 860°C. The third temperature zone is set at 860°C or higher and lower than 870°C. The fourth temperature zone is set at 870°C or higher and lower than 880°C. The fifth temperature zone is set at 880°C or higher.

When apparent gradient in temperature is generated in the width direction of the steel plate 9 inside the steel plate 9, there is a possibility that the steel plate 9 meanders while being finish-rolled. Therefore, the controlling system 7 instructs the induction heating apparatus 3 to reheat the temperature decreasing portion of the steel plate 9. Specifically, the controlling system 7 causes the induction heating apparatus 3 to face the temperature decreasing portion of the steel plate 9. The controlling system 7 applies a necessary current to the induction heating apparatus 3. As a result, the induction heating apparatus 3 reheats the temperature decreasing portion of the steel plate 9.

Next, by use of Figs. 6 and 7, operations of the controlling system 7 will be described.

Figs. 6 and 7 are flowcharts for illustrating operations of the system for controlling the hot-rolled steel plant in Embodiment 1 of the present invention.

In step S1, the controlling system 7 collects steel material information, such as a steel grade and size. Thereafter, the process proceeds to step S2. In step S2, the controlling system 7 collects actual performance data of the reheating furnace 1. Thereafter, the process proceeds to step S3.

In step S3, the controlling system 7 updates the temperature computation value of the slab 8 inside the reheating furnace 1. Thereafter, the process proceeds to step S4. In step S4, the controlling system 7 determines whether or not the slab 8 has been extracted from the reheating furnace 1.

When the slab 8 has not been extracted from the reheating furnace 1 in step S4, the process proceeds to step S5. In step S5, the controlling system 7 sets a timer of a fixed cycle from several tens of seconds to several minutes. Thereafter, the process returns to step S2.

When the slab 8 has been extracted from the reheating furnace 1 in step S4, the process proceeds to step S6. In step S6, the controlling system 7 sets the temperature computation value of the slab 8 extracted from the reheating furnace 1 at an initial value. Thereafter, the process proceeds to step S7.

In step S7, the controlling system 7 determines temperature variation conditions, such as air cooling, water cooling or rolling. Thereafter, the process proceeds to step S8. In step S8, the controlling system 7 updates the temperature computation value of the steel plate 9. Thereafter, the process proceeds to step S9. In step S9, the controlling system 7 determines whether or not steel plate 9 has arrived at the entry side of the induction heating apparatus 3.

When the steel plate 9 has not arrived at the entry side of the induction heating apparatus 3 in step S9, the process proceeds to step S10. In step S10, the controlling system 7 sets a timer of a fixed cycle of several seconds or less. Thereafter, the process returns to step S7.

When the steel plate 9 has arrived at the entry side of the induction heating apparatus 3 in step S9, the process proceeds to step S11. In step S11, the controlling system 7 computes the temperature distribution inside the steel plate 9 on the delivery side of the induction heating apparatus 3. Thereafter, the process proceeds to step S12. In step S12, the controlling system 7 performs, on the basis of the heating capacity, frequency and conductivity of the induction heating apparatus 3, computation and setting of heat amount necessary to make the temperature distribution inside the steel plate 9 uniform.

According to the above-described Embodiment 1, the temperature distribution inside the steel plate 9 when the steel plate 9 arrives at the delivery side of the induction heating apparatus 3 is computed multi-dimensionally due to the slab 8 sequentially taking over data of temperature distribution inside the slab 8 when the slab 8 is extracted from the reheating furnace 1. Therefore, it is possible to accurately ascertain the temperature distribution inside the steel plate 9 when the steel plate 9 arrives at the delivery side of the induction heating apparatus 3.

Moreover, the induction heating apparatus 3 is controlled so that, on the basis of the computation value of asymmetric temperature distribution inside the steel plate 9 when the steel plate 9 arrives at the delivery side of the induction heating apparatus 3, the temperature distribution inside the steel plate 9 on the delivery side of the induction heating apparatus 3 becomes a desired temperature distribution. Therefore, it is possible to make the temperature distribution inside the steel plate 9 more uniform on the delivery side of the induction heating apparatus 3. As a result, inconveniences in quality and operation in finish rolling can be reduced.

Moreover, parameters on computing the temperature distribution inside the steel plate 9 are corrected on the basis of the temperature distribution data and the sampling data associated with the information of the steel plate 9. Therefore, it is possible to improve computation accuracy of the temperature distribution inside the steel plate 9.

Next, by use of Fig. 8, an example of the controlling system 7 will be described.

Fig. 8 is a hardware configuration diagram of the system for controlling the hot-rolled steel plant in Embodiment 1 of the present invention.

Each function of the controlling system 7 can be implemented by a configuration simpler than the configuration in Fig. 3. For example, each function of the controlling system 7 can be implemented by a processing circuit. For example, the processing circuit includes at least one processor 13a and at least one memory 13b. For example, the processing circuit includes at least one dedicated hardware 14.

When the processing circuit includes at least one processor 13a and at least one memory 13b, each function of the controlling system 7 can be implemented by software, firmware or a combination of software and firmware. At least one of the software and the firmware is described as a program. At least one of the software and the firmware is stored in at least one memory 13b. At least one processor 13a implements each function of the controlling system 7 by reading programs stored in at least one memory 13b and executing thereof. At least one processor 13a is also referred to as a CPU (Central Processing Unit), a processing device, a computing device, a microprocessor, a microcomputer or a DSP. For example, at least one memory 13b is a nonvolatile or volatile semiconductor memory, such as a RAM, a ROM, a flash memory, an EPROM, or an EEPROM, a magnetic disk, a flexible disk, an optical disk, a compact disk, a mini disk or a DVD.

When the processing circuit includes at least one dedicated hardware 14, the processing circuit is, for example, a single circuit, a complex circuit, a programmed processor, a parallel-programmed processor, an ASIC, an FPGA or a combination thereof. For example, each function of the controlling system 7 can be implemented by the processing circuit. For example, the respective functions of the controlling system 7 can be collectively implemented by the processing circuit.

Regarding the respective functions of the controlling system 7, it may be possible that a part thereof is implemented by the dedicated hardware 14 and another part thereof is implemented by the software or the firmware. For example, the function of the extraction temperature computation unit 7a may be implemented by the processing circuit as the dedicated hardware 14, and functions other than those of the extraction temperature computation unit 7a may be implemented by at least one processor 13a reading the programs stored in at least one memory 13b and executing thereof.

In this manner, the processing circuit implements each function of the controlling system 7 by the hardware 14, the software, the firmware or a combination thereof.

### Embodiment 2

Fig. 9 is a perspective view of the induction heating apparatus of the hot-rolled steel plant to which the system for controlling the hot-rolled steel plant in Embodiment 2 of the present invention is applied. Note that same or corresponding parts as those in Embodiment 1 are assigned with same reference signs. Description of the parts will be omitted.

The induction heating apparatus 3 in Fig. 9 is a solenoid-type induction heating apparatus 3. The induction heating apparatus 3 includes an inductor 3a. The inductor 3a is fixed to cover a part of the steel plate 9. The inductor 3a can heat the entire steel plate 9 in the width direction of the steel plate 9.

Next, by use of Fig. 10, reheating of temperature decreasing portion in the steel plate 9 will be described.

Fig. 10 is a diagram showing computation results of temperature distribution inside the steel plate by the system for controlling the hot-rolled steel plant in Embodiment 2 of the present invention.

In Fig. 10, for example, the mesh is divided into five in the thickness direction of the slab 8. For example, the mesh is divided into twenty-one in the longitudinal direction of the steel plate 9. For example, the temperature of each mesh is divided into five temperature zones. The first temperature zone is set lower than 850°C. The second temperature zone is set at 850°C or higher and lower than 860°C. The third temperature zone is set at 860°C or higher and lower than 870°C. The fourth temperature zone is set at 870°C or higher and lower than 880°C. The fifth temperature zone is set at 880°C or higher.

When partial temperature drop due to skid marks is generated in the longitudinal direction of the steel plate 9 inside the steel plate 9, there is a possibility that variations in the plate thickness of the steel plate 9 and the roll force of the steel plate 9 are generated while the steel plate 9 is subjected to finish rolling. Therefore, the controlling system 7 applies a necessary current to the induction heating apparatus 3 when the temperature decreasing portion of the steel plate 9 passes through the induction heating apparatus 3. As a result, the induction heating apparatus 3 reheats the temperature decreasing portion of the steel plate 9.

According to the above-described Embodiment 2, when the temperature decreasing portion of the steel plate 9 passes through the induction heating apparatus 3, the induction heating apparatus 3 reheats the temperature decreasing portion of the steel plate 9. Therefore, it is possible to make the temperature of the temperature decreasing portion of the steel plate 9 due to the skid marks close to a temperature at the center portion of the steel plate 9.

Note that the induction heating apparatus 3 of Embodiment 1 and the induction heating apparatus 3 of Embodiment 2 may be disposed in line in a conveying direction of the steel plate 9. For example, the induction heating apparatus 3 of Embodiment 2 may be disposed on the delivery side of the induction heating apparatus 3 of Embodiment 1. For example, the induction heating apparatus 3 of Embodiment 2 may be disposed on the entry side of the induction heating apparatus 3 of Embodiment 1. In these cases, effects similar to the effects in Embodiment 1 and the effects in Embodiment 2 can be obtained.

### Industrial Applicability

As described above, the system for controlling the hot-rolled steel plant according to the present invention can be used for a system capable of accurately ascertaining temperature distribution inside a steel plate when the steel material arrives at a delivery side of an induction heating apparatus.

### Reference Signs List

1 reheating furnace, 2 roughing mill, 3 induction heating apparatus, 3a inductor, 4 finishing mill, 5 cooling facility, 6 coiler, 7 controlling system, 7a extraction temperature computation unit, 7b entry-side temperature computation unit, 7c delivery-side temperature computation unit, 7d controlling unit, 7e temperature distribution data collection unit, 7f sampling data collection unit, 7g storage unit, 7h parameter correction unit, 8 slab, 9 steel plate, 10 on-line system, 10a computer, 10b electric PLC, 10c instrumentation PLC, 11 user interface, 11a user PC, 12 integrated plant data management solution, 12a RDB server, 12b sampling data server, 12c shared database, 12d search engine server, 13a processor, 13b memory, 14 hardware

## Claims

1. A system for controlling a hot-rolled steel plant, said hot-rolled steel plant having a heating furnace (1) for heating a steel material and an induction heating apparatus (3) disposed on a delivery side of the heating furnace (1), the system comprising:
an extraction temperature computation unit (7a) for computing temperature distribution inside the steel material when the steel material is extracted from the heating furnace (1);
an entry-side temperature computation unit (7b) for computing, based on the temperature distribution inside the steel material computed by the extraction temperature computation unit (7a), temperature distribution inside the steel material when the steel material arrives at an entry side of the induction heating apparatus (3); and
a delivery-side temperature computation unit (7c) for computing, based on the temperature distribution inside the steel material computed by the entry-side temperature computation unit (7b), temperature distribution inside the steel material when the steel material arrives at a delivery side of the induction heating apparatus (3).

2. The system for controlling the hot-rolled steel plant according to claim 1, further comprising:
a controlling unit (7d) for controlling, based on the temperature distribution inside the steel material computed by the delivery-side temperature computation unit (7c), the induction heating apparatus (3) to make the temperature distribution inside the steel material on the delivery side of the induction heating apparatus (3) be a desired temperature distribution.

3. The system for controlling the hot-rolled steel plant according to claim 1 or claim 2, further comprising:
a temperature distribution data collection unit (7e) for collecting data of temperature distribution inside the steel material computed by the delivery-side temperature computation unit (7c);
a sampling data collection unit (7f) for collecting actual sampling data in the heating furnace (1) and the induction heating apparatus (3);
a storage unit (7g) for storing the data of temperature distribution collected by the temperature distribution data collection unit (7e) and the sampling data collected by the sampling data collection unit (7f) in association with information of the steel material; and
a parameter correction unit (7h) for correcting, based on the data of temperature distribution and the sampling data associated with the information of the steel material in the storage unit (7g), a parameter used when the delivery-side temperature computation unit (7c)computes the temperature distribution inside the steel material.

4. The system for controlling the hot-rolled steel plant according to any one of the preceding claims, wherein the extraction temperature computation unit (7a) and/or the entry-side temperature computation unit (7b) and/or the delivery-side temperature computation unit (7c) substitutes a finitely-divided fine mesh for time and space and computes the temperature distribution by method of finite differences or the finite element method.

5. The system for controlling the hot-rolled steel plant according to one of the preceding claims, wherein the extraction temperature computation unit (7a) computes the temperature distribution based on an ambient temperature inside the heating furnace (1).

6. The system for controlling the hot-rolled steel plant according to claim 5, wherein the extraction temperature computation unit (7a) computes the temperature distribution based on the measured value in each of multiple thermocouples provided inside the heating furnace (1).

7. The system for controlling the hot-rolled steel plant according to any one of the preceding claims 4 to 6, wherein the entry-side temperature computation unit (7b) sets the mesh for time and preferable, the mesh for space in conformity thereto, in response to changes in conditions.

8. The system for controlling the hot-rolled steel plant according to any one of the preceding claims, wherein a roughing mill (2) of the hot-rolled steel plant is provided on a delivery side of the heating furnace (1) of the hot-rolled steel plant and the induction heating apparatus (3) of the hot-rolled steel plant is provided on the delivery side of the heating furnace (1).

9. The system for controlling the hot-rolled steel plant according to any one of the preceding claims, wherein the induction heating apparatus (3) of the hot-rolled steel plant comprises several inductors (3a) which are movable in a width direction of a steel plate (9).

10. The system for controlling the hot-rolled steel plant according to any one of the preceding claims 1 to 8, wherein the induction heating apparatus (3) of the hot-rolled steel plant receives a necessary current when a temperature decreasing portion of a steel plate (9) passes therethrough in order to reheat the temperature decreasing portion.

11. The system for controlling the hot-rolled steel plant according to claim 10, wherein the induction heating apparatus (3) of the hot-rolled steel plant can heat the entire steel plate (9) in a width direction of the steel plate (9).

12. The system for controlling the hot-rolled steel plant according to any one of the claims 1 to 8, the hot-rolled steel plant having
a first induction heating apparatus (3) according to claim 9 and
a second induction heating apparatus according to claim 10 or 11 which is disposed on the entry side or on the delivery side of the first induction heating apparatus (3).

## Patentansprüche

1. System zur Steuerung eines Warmwalzstahlwerks, wobei das Warmwalzstahlwerk einen Erwärmungsofen (1) zum Erwärmen eines Stahlmaterials und eine Induktionserwärmungsvorrichtung (3) aufweist, welche auf einer Ausgangsseite des Erwärmungsofens (1) angeordnet ist, wobei das System beinhaltet:
eine Entnahmetemperaturberechnungseinheit (7a) zum Berechnen der Temperaturverteilung innerhalb des Stahlmaterials, wenn das Stahlmaterial aus dem Erwärmungsofen (1) entnommen wird;
eine eingangsseitige Temperaturberechnungseinheit (7b) zum Berechnen der Temperaturverteilung im Inneren des Stahlmaterials, wenn das Stahlmaterial an einer Eingangsseite der Induktionserwärmungsvorrichtung (3) ankommt, basierend auf der von der Entnahmetemperaturberechnungseinheit (7a) berechneten Temperaturverteilung im Inneren des Stahlmaterials; und
eine ausgangsseitige Temperaturberechnungseinheit (7c) zum Berechnen der Temperaturverteilung im Inneren des Stahlmaterials, wenn das Stahlmaterial an einer Ausgangsseite der Induktionserwärmungsvorrichtung (3) ankommt, basierend auf der von der eingangsseitigen Temperaturberechnungseinheit (7b) berechneten Temperaturverteilung im Inneren des Stahlmaterials.

2. System zur Steuerung des Warmwalzstahlwerks nach Anspruch 1, welches weiter beinhaltet:
ein Steuergerät (7d) zum Steuern der Induktionserwärmungsvorrichtung (3) basierend auf der von der ausgangsseitigen Temperaturberechnungseinheit (7c) berechneten Temperaturverteilung im Inneren des Stahlmaterials, so dass die Temperaturverteilung im Inneren des Stahlmaterials auf der Ausgangsseite der Induktionserwärmungsvorrichtung (3) eine gewünschte Temperaturverteilung annimmt.

3. System zur Steuerung des Warmwalzstahlwerks nach Anspruch 1 oder Anspruch 2, welches weiter beinhaltet:
eine Temperaturverteilungsdatensammeleinheit (7e) zum Sammeln von Daten der Temperaturverteilung im Inneren des Stahlmaterials, welche von der ausgangsseitigen Temperaturberechnungseinheit (7c) berechnet wird;
eine Probennahmedatensammeleinheit (7f) zum Sammeln von tatsächlichen Probennahmedaten in dem Erwärmungsofen (1) und der Induktionserwärmungsvorrichtung (3);
eine Speichereinheit (7g) zum Speichern der Daten der Temperaturverteilung, die von der Temperaturverteilungsdatensammeleinheit (7e) gesammelt wurden, und der Probennahmedaten, die von der Probennahmedatensammeleinheit (7f) gesammelt wurden, in Verbindung mit Informationen über das Stahlmaterial; und
eine Parameterkorrektureinheit (7h) zum Korrigieren eines Parameters, der verwendet wird, wenn die ausgangsseitige Temperaturberechnungseinheit (7c) die Temperaturverteilung im Inneren des Stahlmaterials berechnet, basierend auf den Daten der Temperaturverteilung und der Probennahmedaten, die mit den Informationen über das Stahlmaterial in der Speichereinheit (7g) verbunden sind.

4. System zur Steuerung des Warmwalzstahlwerks nach einem der vorhergehenden Ansprüche, wobei die Entnahmetemperaturberechnungseinheit (7a) und/oder die eingangsseitige Temperaturberechnungseinheit (7b) und/oder die ausgangsseitige Temperaturberechnungseinheit (7c) ein feinteiliges Gitter für Raum und Zeit substituiert und die Temperaturverteilung nach dem Verfahren der Finite-Differenzen-Methode oder der Finite-Elemente-Methode berechnet.

5. System zur Steuerung des Warmwalzstahlwerks nach einem der vorhergehenden Ansprüche, wobei die Entnahmetemperaturberechnungseinheit (7a) die Temperaturverteilung auf der Basis einer Umgebungstemperatur im Inneren des Erwärmungsofens (1) berechnet.

6. System zur Steuerung des Warmwalzstahlwerks nach Anspruch 5, wobei die Entnahmetemperaturberechnungseinheit (7a) die Temperaturverteilung basierend auf dem Messwert in jedem von mehreren im Inneren des Erwärmungsofens (1) bereitgestellten Thermoelementen berechnet.

7. System zur Steuerung des Warmwalzstahlwerkes nach einem der vorhergehenden Ansprüche 4 bis 6, wobei die eingangsseitige Temperaturberechnungseinheit (7b) das Gitter für Zeit und vorzugsweise das entsprechende Gitter für Raum in Abhängigkeit von Veränderungen von Bedingungen festlegt.

8. System zur Steuerung des Warmwalzstahlwerkes nach einem der vorhergehenden Ansprüche, wobei ein Vorwalzwerk (2) des Warmwalzstahlwerkes auf einer Ausgangsseite des Erwärmungsofens (1) des Warmwalzstahlwerkes und die Induktionserwärmungsvorrichtung (3) des Warmwalzstahlwerkes auf der Ausgangsseite des Erwärmungsofens (1) bereitgestellt ist.

9. System zur Steuerung des Warmwalzstahlwerkes nach einem der vorhergehenden Ansprüche, wobei die Induktionserwärmungsvorrichtung (3) des Warmwalzstahlwerkes mehrere Induktoren (3a) beinhaltet, die in einer Breitenrichtung einer Stahlplatte (9) bewegbar sind.

10. System zur Steuerung des Warmwalzstahlwerkes nach einem der vorhergehenden Ansprüche 1 bis 8, wobei die Induktionserwärmungsvorrichtung (3) des Warmwalzstahlwerkes, wenn ein Abschnitt eines Stahlbleches (9) mit sinkender Temperatur dieses durchläuft, einen notwendigen Strom erhält, um den Abschnitt mit sinkender Temperatur wieder zu erwärmen.

11. System zur Steuerung des Warmwalzstahlwerkes nach Anspruch 10, wobei die Induktionserwärmungsvorrichtung (3) des Warmwalzstahlwerkes die gesamte Stahlplatte (9) in einer Breitenrichtung der Stahlplatte (9) erwärmen kann.

12. System zur Steuerung des Warmwalzstahlwerks nach einem der Ansprüche 1 bis 8, wobei das Warmwalzstahlwerk beinhaltet:
eine erste Induktionserwärmungsvorrichtung (3) nach Anspruch 9; und
eine zweite Induktionserwärmungsvorrichtung nach Anspruch 10 oder 11, welche an der Eingangsseite oder an der Ausgangsseite der ersten Induktionserwärmungsvorrichtung (3) angeordnet ist.

## Revendications

1. Système de commande d'une installation d'acier laminé à chaud, ladite installation d'acier laminé à chaud présentant un four de chauffage par induction (1) destiné à chauffer un matériau en acier et un appareil de chauffage par induction (3) disposé au niveau d'une sortie du four de chauffage (1), le système comprenant :
une unité de calcul de température d'extraction (7a) pour calculer la répartition de température à l'intérieur du matériau en acier lorsque le matériau en acier est extrait d'un four de chauffage (1) ;
une unité de calcul de température côté entrée (7b) pour calculer, sur la base de la répartition de température à l'intérieur du matériau en acier calculée par l'unité de calcul de température d'extraction (7a), la répartition de température à l'intérieur du matériau en acier lorsque le matériau en acier arrive au niveau d'une entrée de l'appareil de chauffage par induction (3) ; et
une unité de calcul de température de sortie (7c) pour calculer, sur la base de la répartition de température à l'intérieur du matériau en acier calculée par l'unité de calcul de température côté entrée (7b), la répartition de température à l'intérieur du matériau en acier lorsque le matériau en acier arrive au niveau d'une sortie de l'appareil de chauffage par induction (3).

2. Système de commande de l'installation d'acier laminé à chaud selon la revendication 1, comprenant en outre :
une unité de commande (7d) pour commander, sur la base de la répartition de température à l'intérieur du matériau en acier calculée par l'unité de calcul de température côté sortie (7c), l'appareil de chauffage par induction (3) pour faire en sorte que la répartition de température à l'intérieur du matériau en acier au niveau de la sortie de l'appareil de chauffage par induction (3) soit une répartition de température souhaitée.

3. Système de commande de l'installation d'acier laminé à chaud selon la revendication 1 ou 2, comprenant en outre :
une unité de collecte de données de répartition de température (7e) pour collecter des données de répartition de température à l'intérieur du matériau en acier calculées par l'unité de calcul de température côté sortie (7c) ;
une unité de collecte de données d'échantillonnage (7f) pour collecter des données d'échantillonnage réelles dans le four de chauffage (1) et l'appareil de chauffage par induction (3) ;
une unité de stockage (7g) pour stocker les données de répartition de température collectées par l'unité de collecte de données de répartition de température (7e) et les données d'échantillonnage collectées par l'unité de collecte de données d'échantillonnage (7f) en association avec des informations du matériau en acier ; et
une unité de correction de paramètre (7h) pour corriger, sur la base des données de répartition de température et des données d'échantillonnage associées aux informations du matériau en acier dans l'unité de stockage (7g), un paramètre utilisé lorsque l'unité de calcul de température côté sortie (7c) calcule la répartition de température à l'intérieur du matériau en acier.

4. Système de commande de l'installation d'acier laminé à chaud selon l'une quelconque des revendications précédentes, dans lequel l'unité de calcul de température d'extraction (7a) et/ou l'unité de calcul de température côté entrée (7b) et/ou l'unité de calcul de température côté sortie (7c) remplace un tamis fin finement divisé temporellement et spatialement et calcule la répartition de température par la méthode des différences finies ou des éléments finis.

5. Système de commande de l'installation d'acier laminé à chaud selon l'une quelconque des revendications précédentes, dans lequel l'unité de calcul de température d'extraction (7a) calcule la répartition de température sur la base d'une température ambiante à l'intérieur du four de chauffage (1).

6. Système de commande de l'installation d'acier laminé à chaud selon la revendication 5, dans lequel l'unité de calcul de température d'extraction (7a) calcule la répartition de température sur la base de la valeur mesurée dans chacun des multiples thermocouples fournis à l'intérieur du four de chauffage (1).

7. Système de commande de l'installation d'acier laminé à chaud selon l'une quelconque des revendications précédentes 4 à 6, dans lequel l'unité de calcul de température côté entrée (7b) définit la maille au niveau du temps et de préférence, la maille au niveau de l'espace en conformité avec celle-ci, en réponse aux changements de conditions.

8. Système de commande de l'installation d'acier laminé à chaud selon l'une quelconque des revendications précédentes, dans lequel un laminoir dégrossisseur (2) de l'installation d'acier laminé à chaud est prévu sur un côté de sortie du four de chauffage (1) de l'installation d'acier laminé à chaud et l'appareil de chauffage par induction (3) de l'installation d'acier laminé à chaud est prévu sur le côté de sortie du four de chauffage (1).

9. Système de commande de l'installation d'acier laminé à chaud selon l'une quelconque des revendications précédentes, dans lequel l'appareil de chauffage par induction (3) de l'installation d'acier laminé à chaud comprend plusieurs bobines d'induction (3a) qui sont mobiles dans une direction de largeur d'une plaque d'acier (9).

10. Système de commande de l'installation d'acier laminé à chaud selon l'une quelconque des revendications précédentes 1 à 8, dans lequel l'appareil de chauffage par induction (3) de l'installation d'acier laminé à chaud reçoit un courant nécessaire lorsqu'une partie décroissant en température d'une plaque d'acier (9) traverse celle-ci afin de réchauffer la partie décroissant en température.

11. Système de commande de l'installation d'acier laminé à chaud selon la revendication 10, dans lequel l'appareil de chauffage par induction (3) de l'installation d'acier laminé à chaud peut chauffer toute la plaque d'acier (9) dans une direction de largeur de la plaque d'acier (9).

12. Système de commande d'installation d'acier laminé à chaud selon l'une quelconque des revendications précédentes 1 à 8, l'installation d'acier laminé à chaud présentant
un premier appareil de chauffage par induction (3) selon la revendication 9 et
un second appareil de chauffage par induction selon la revendication 10 ou 11 qui est disposé au niveau de l'entrée ou au niveau de la sortie du premier appareil de chauffage par induction (3).
